# EUROPEAN PATENT APPLICATION

(11) **EP 3 564 329 A1**
(43) Date of publication of application: **06.11.2019**
(21) Application number: 17888853.3
(22) Date of filing: 08.08.2017
(51) Int. Cl.: C09D 183/00, C09D 7/40, C08G 77/26, C09K 3/18

(54) **LIQUID COMPOSITION FOR FILM FORMATION AND METHOD FOR PRODUCING SAME**

(30) Priority: 28.12.2016 JP 2016256164
(71) Applicant: Mitsubishi Materials Electronic Chemicals Co., Ltd., Akita-shi Akita 010-8585 (JP)
(72) Inventor: SHIRAISHI, Shinya, Akita-shi Akita 010-8585 (JP); SAITO, Tomoya, Akita-shi Akita 010-8585 (JP)
(74) Representative: Gille Hrabal
(86) International application number: PCT/JP2017/028704
(87) International publication number: WO 2018/123126

(57) **Abstract**

This liquid composition for film formation contains: a component that is mainly composed of a silica sol-gel; and a solvent. If the silica sol-gel is taken as 100% by mass, the silica sol-gel contains 0.5-10% by mass of a fluorine-containing functional group component (F) that has a perfluoroamine structure represented by general formula (1) and 0.5-20% by mass of an alkyl group component (G) that has 2-7 carbon atoms. The solvent is a mixed solvent of water and an alcohol having 1-4 carbon atoms, or alternatively, a mixed solvent of water, an alcohol having 1-4 carbon atoms and an organic solvent other than the alcohol.

## Description

### TECHNICAL FIELD

The present invention relates to a liquid composition for film formation capable of imparting a plurality of functions and a method for producing the same. More specifically, it relates to a liquid composition for forming a stain resistant film having water repellency and oil repellency (hereinafter referred to as water and oil repellency.) and a film capable of imparting mold releasability (hereinafter referred to as mold releasability-imparting film.) to a mold represented by a metal mold (hereinafter referred to as a metal mold and the like.) and a method for producing the same. This international application claims priority based on Japanese Patent Application No. 256164 (Japanese Patent Application No. 2016-256164) filed on December 28, 2016, and the entire contents of Japanese Patent Application No. 2016-256164 is incorporated into this international application.

### BACKGROUND ART

Conventionally, as a compound capable of imparting water and oil repellency, a fluorine-containing silane compound having a specific perfluoroamine structure has been disclosed (for example, see Patent Document 1.). This fluorine-containing silane compound has the characteristics that it does not contain a perfluoro-alkyl group having 8 or more carbon atoms and while it has a chemical structure having no fear of forming perfluorooctanesulfonic acid (PFOS) or perfluorooctanoic acid (PFOA) which causes problems in terms of bioaccumulation and environmental adaptability, it is possible to impart excellent water and oil repellency, and is useful as a fluorine-based silane coupling agent that has applicability to various kinds of applications.

### PRIOR ART DOCUMENT

### PATENT DOCUMENT

Patent Document 1: JP 2015-196644A (Abstract)

### SUMMARY OF THE INVENTION

### PROBLEMS TO BE SOLVED BY THE INVENTION

When a liquid composition is prepared by adding a small amount of the fluorine-containing silane compound shown in Patent Document 1, water and oil repellency can be imparted to a film formed by this liquid composition. However, when the fluorine-containing silane compound is mixed with a general alcohol solvent to prepare a liquid composition, the surface tension of the fluorine-containing silane compound is largely different from the surface tension of the alcohol solvent. For this reason, when this liquid composition is applied onto a substrate by a bar coater, a polka dot pattern and a coater streak generate in a coating film so that it is inferior in film formability. Further, when a coating film is formed by a liquid composition in which only a fluorine-containing silane compound and a solvent are mixed, the strength of the coating film is low and the adhesion of the coating film to the substrate is not sufficient. Moreover, when the film thickness after film formation is about the wavelength of visible light (100 nm to 800 nm), there is a problem of generating iridescent interference fringes in the film at the time of gradually evaporating from a thin portion in the wet film thickness during the drying process in which a solvent evaporates after application of the liquid composition.

An object of the present invention is to provide a liquid composition for film formation which is to impart a stain-proof function of water and oil repellency and releasability to the formed film, and is capable of forming a film excellent in film formability, having good adhesion to a substrate, high strength, and does not generate iridescent interference fringes. Another object of the present invention is to provide a method for producing a liquid composition for film formation having the above-mentioned characteristic features.

### MEANS TO SOLVE THE PROBLEMS

A first aspect of the present invention is directed to a liquid composition for film formation which comprises: a component that is mainly composed of silica sol-gel; and a solvent, when the silica sol-gel is taken as 100% by mass, the silica sol-gel contains 0.5-10% by mass of a fluorine-containing functional group component (F) that has a perfluoroamine structure represented by general formula (1) and 0.5-20% by mass of an alkyl group component (G) that has 2-7 carbon atoms, the solvent is a mixed solvent of water and an alcohol having 1-4 carbon atoms, or a mixed solvent of water, an alcohol having 1-4 carbon atoms and an organic solvent other than the above-mentioned alcohol.

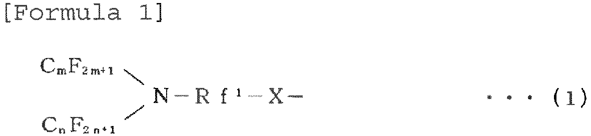

In the above-mentioned formula (1), m and n are the same or different integers of 1-6, respectively. Also, Rf¹ represents a perfluoroalkylene group having 1-6 carbon atoms, which may be linear or branched. Further, in the above-mentioned formula (1), X represents a hydrocarbon group having 2-10 carbon atoms, and may contain one or more bondings selected from an ether bond, a CO-NH bond and a -O-CO-NH bond.

A second aspect of the present invention is directed to a method which comprises (a) a step of mixing tetramethoxysilane or tetraethoxysilane as a silicon alkoxide (A), an epoxy group-containing silane (B), a first solvent having a boiling point of lower than 120°C and water to prepare a mixed liquid, (b) a step of mixing the above-mentioned mixed liquid and a catalyst comprising an organic acid, an inorganic acid or a titanium compound and hydrolyzing the above-mentioned silicon alkoxide (A) and the above-mentioned epoxy group-containing silane (B) to prepare a first hydrolyzate (C), and (c) a step of mixing a fluorine-containing silane (D) represented by the following general formula (2), an alcohol having 1-4 carbon atoms or a mixed solvent of an alcohol having 1-4 carbon atoms and an organic solvent other than the above-mentioned alcohol with a liquid containing the above-mentioned first hydrolyzate (C) and hydrolyzing the above-mentioned fluorine-containing silane (D) to produce a liquid composition for film formation containing a silica sol-gel (E) which is a second hydrolyzate, wherein in the above-mentioned step (a), the above-mentioned epoxy group-containing silane (B) is so mixed that it contains in an amount of 1-40% by mass based on the total mass of the above-mentioned silicon alkoxide (A) and the above-mentioned epoxy group-containing silane (B), and in the above-mentioned step (c), the above-mentioned fluorine-containing silane (D) is so mixed that it is contained in a ratio of 0.6-12% by mass based on the above-mentioned silica sol-gel (E).

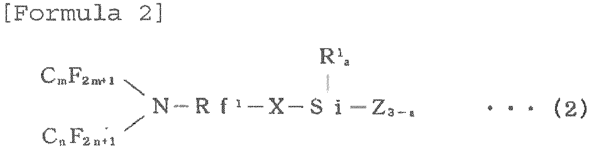

In the above-mentioned formula (2), m and n are each the same or different integer of 1-6. Also, Rf¹ represents a perfluoroalkylene group having 1-6 carbon atoms, which may be linear or branched. In addition, in the above-mentioned formula (2), X represents a hydrocarbon group having 2-10 carbon atoms, and may contain one or more bondings selected from an ether bond, a CO-NH bond and a -O-CO-NH bond. Further, in the above-mentioned formula (2), R¹ and Z are alkoxy groups (provided that "a" is an integer of 0 to 3).

### EFFECTS OF THE INVENTION

In the liquid composition for film formation of the first aspect of the present invention, the liquid composition contains a silica sol-gel as a main component, so that a coating film with high strength can be obtained and adhesion of the coating film to a substrate becomes good. In addition, the liquid composition contains 0.5-10% by mass of a fluorine-containing functional group component (F) having a perfluoroamine structure represented by the general formula (1) and 0.5-20% by mass of an alkyl group component (G) having 2-7 carbon atoms, so that it is possible to impart excellent water and oil repellency, and releasability to the formed films. Also, the solvent is a mixed solvent of water and an alcohol having 1-4 carbon atoms, or a mixed solvent of water, an alcohol having 1-4 carbon atoms and an organic solvent other than the alcohol, so that the coating film can be formed with good film formability. Further, the alkyl group component having 2-7 carbon atoms is contained in the silica sol-gel, so that the liquid composition is improved in leveling property during the drying process, and the formed film has a uniform thickness and does not generate iridescent interference fringes.

In the method for producing the liquid composition for film formation of the second aspect of the present invention, by mixing a mixed liquid of silicon alkoxide and an epoxy group-containing silane with a catalyst, a first hydrolyzate of the silicon alkoxide and the epoxy group-containing silane can be formed. Also, the second hydrolyzate is so formed that a fluorine-containing silane represented by the general formula (2), an alcohol having 1-4 carbon atoms or a mixed solvent of an alcohol having 1-4 carbon atoms and an organic solvent other than the above-mentioned alcohol are mixed with the first hydrolyzate, and the fluorine-containing silane is hydrolyzed, so that, firstly, it is possible to produce a liquid composition excellent in film formability without forming an aggregate comprising fluorine alone, secondly, it is possible to produce a liquid composition which can form a film that imparts water and oil repellency, and releasability, and thirdly, it is possible to produce a liquid composition which can form a film that has good adhesion to a substrate and has high strength. In addition, it contains 1-40% by mass of the epoxy group-containing silane (B) based on the total mass of the above-mentioned silicon alkoxide (A) and the above-mentioned epoxy group-containing silane (B), so that it is possible to produce a liquid composition which can form a film that is improved in leveling property during the drying process, has uniform film thickness and does not generate iridescent interference fringes.

### EMBODIMENT TO CARRY OUT THE INVENTION

Next, an embodiment of the present invention will be explained.

### [Method of producing liquid composition for film formation]

### [Preparation of mixed solution]

First, tetramethoxysilane or tetraethoxysilane as a silicon alkoxide (A), an epoxy group-containing silane (B), an alcohol having a boiling point of lower than 120°C and a carbon number in the range of 1-4, and water are mixed to prepare a mixed liquid. As the silicon alkoxide (A), there may be specifically mentioned tetramethoxysilane, an oligomer thereof or tetraethoxysilane, an oligomer thereof. For example, for the purpose of obtaining a film with high hardness, it is preferable to use tetramethoxysilane, while it is preferable to use tetraethoxysilane in the case where methanol generated at the time of hydrolysis is to be avoided.

The above-mentioned epoxy group-containing silane (B) may be specifically mentioned 2-(3,4-epoxycyclohexyl)ethyltrimethoxysilane, 3-glycidoxypropylmethyldimethoxysilane, 3-glycidoxypropylmethyldiethoxysilane, 3-glycidoxypropyltrimethoxysilane, 3-glycidoxypropyltriethoxysilane or a polyfunctional epoxysilane. The epoxy group-containing silane (B) is contained in an amount of 1-40% by mass, preferably 2.5-20% by mass based on the total mass of the silicon alkoxide (A) and the epoxy group-containing silane (B). If the epoxy group-containing silane (B) is less than 1% by mass which is the lower limit value, iridescent interference fringes still occur on the formed film, while if it exceeds 40% by mass which is the upper limit value, the strength of the formed film becomes low. When the epoxy group-containing silane (B) is contained in the range of 1 to 40% by mass as mentioned above, the reason why the formed film does not generate iridescent interference fringes is that the leveling property is improved in the drying process and the film thickness is made uniform by also contributing the epoxy group to polymerization by ring opening in the hydrolysis polymerization process.

The alcohol having a carbon number in the range of 1-4 may be mentioned one or more kinds of alcohols in this range . Such an alcohol may be mentioned, for example, methanol (boiling point: 64.7°C), ethanol (boiling point: about 78.3°C), propanol (n-propanol (boiling point: 97-98°C) and isopropanol (boiling point: 82.4°C)). In particular, methanol or ethanol is preferable. These alcohols are easy to mix with silicon alkoxide. As the above-mentioned water, it is desirable to use ion-exchanged water, pure water or the like in order to prevent mixing of impurities. To the silicon alkoxide (A) and the epoxy group-containing silane (B) are added an alcohol having a carbon number in the range of 1-4 and water, and the mixture is stirred preferably at a temperature of 10 to 30°C for 5 to 20 minutes to prepare a mixed liquid.

### [Preparation of first hydrolyzate]

The mixed liquid prepared as mentioned above and a catalyst comprising an organic acid, an inorganic acid or a titanium compound are mixed. At this time, the liquid temperature is maintained at a temperature of preferably 30 to 80°C and stirred preferably for 1 to 24 hours. According to the procedure, a first hydrolyzate (C) of the silicon alkoxide (A) and the epoxy group-containing silane (B) is prepared. The first hydrolyzate can be obtained by mixing with a ratio of 2-50% by mass of the silicon alkoxide, 0.1-30% by mass of the epoxy group-containing silane, 20-98% by mass of the alcohol having a carbon number in the range of 1-4, 0.1-40% by mass of water, and 0.01-5% by mass of the organic acid, the inorganic acid or the titanium compound as a catalyst and promoting the hydrolysis reaction of the silicon alkoxide and the epoxy group-containing silane.

The reason why the ratio of the alcohol having a carbon number in the range of 1-4 is limited in the above-mentioned range is that if the ratio of the alcohol is less than the lower limit value, silicon alkoxide is separated without dissolving in a solution, and the reaction liquid likely gelled during the hydrolysis reaction, on the other hand, if it exceeds the upper limit value, amounts of water necessary for hydrolysis and the catalyst becomes relatively little so that reactivity of hydrolysis is lowered and polymerization does not proceed whereby adhesion of the film is lowered. The reason why the ratio of water is limited in the above-mentioned range is that if the ratio of the water is less than the lower limit value, a hydrolysis rate becomes slow so that polymerization does not proceed whereby adhesion and film formability of the coated film become insufficient, on the other hand, if it exceeds the upper limit value, it causes the problems that the reaction liquid is gelled during the hydrolysis reaction, the silicon alkoxide compound is not dissolved in an aqueous alcohol solution and separated since water is excessive.

A material having an SiO₂ concentration (SiO₂ component) of 1-40% by mass is preferable in the first hydrolyzate. If the SiO₂ concentration of the hydrolyzate is less than the lower limit value, polymerization is insufficient, and lowering in adhesion of the film or occurrence of crack is likely generated, while if it exceeds the upper limit value, it causes the problems that a ratio of water becomes relatively high so that the silicon alkoxide does not dissolve, and the reaction liquid is gelled.

The organic acid, the inorganic acid or the titanium compound functions as a catalyst for accelerating the hydrolysis reaction. The organic acid may be exemplified by formic acid and oxalic acid, the inorganic acid may be exemplified by hydrochloric acid, nitric acid and phosphoric acid, and the titanium compound may be exemplified by tetrapropoxy titanium, tetrabutoxy titanium, tetraisopropoxy titanium, titanium lactate and the like. The catalyst is not limited to the above-mentioned materials. The reason why the ratio of the above-mentioned catalyst is limited to the above-mentioned range is that if it is less than the lower limit value, the reactivity is poor and the polymerization becomes insufficient so that a film is not formed, on the other hand, if it exceeds the upper limit value, whereas there is no effect on the reactivity, a problem such as corrosion and the like of the substrate occurs due to the residual acid.

### [Preparation of silica sol-gel of second hydrolyzate]

In the liquid containing the first hydrolyzate (C) prepared as mentioned above, a fluorine-containing silane (D), the above-mentioned alcohol having 1-4 carbon atoms or the mixed solvent of the alcohol having 1-4 carbon atoms and the organic solvent other than the above-mentioned alcohol are mixed, and the fluorine-containing silane (D) is hydrolyzed to produce a liquid composition for film formation containing a silica sol-gel (E) of a second hydrolyzate. The fluorine-containing silane (D) is contained in an amount of 0.6-12% by mass based on 100% by mass the silica sol-gel (E) of the second hydrolyzate. A preferable content ratio is 1.0-11% by mass. If the fluorine-containing silane (D) is less than 0.6% by mass which is the lower limit value, stain resistance such as water and oil repellency and releasability are difficultly generated in the formed film, while if it exceeds 12% by mass which is the upper limit value, film formability is inferior and the functions of stain resistance and releasability are difficultly expressed.

The fluorine-containing silane is represented by the above-mentioned general formula (2). Examples of the nitrogen-containing perfluoroalkyl group in the above-mentioned formula (2) may be more specifically mentioned perfluoroamine structures represented by the following formulae (3) to (14).

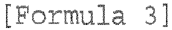

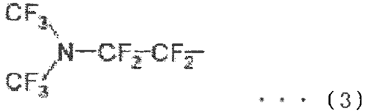

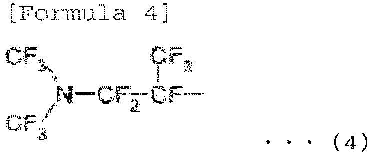

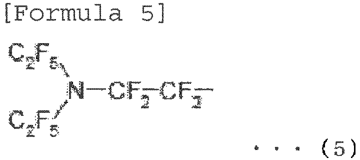

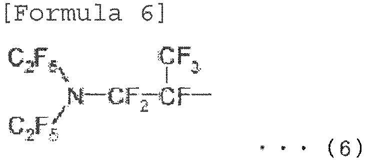

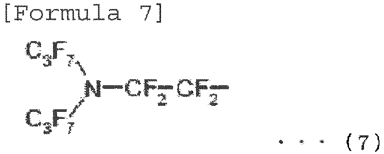

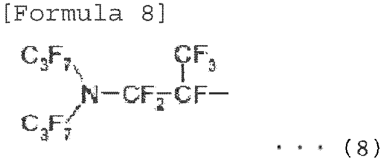

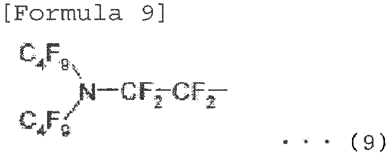

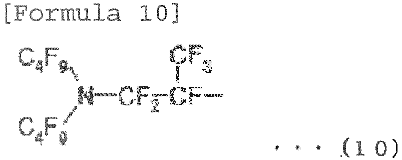

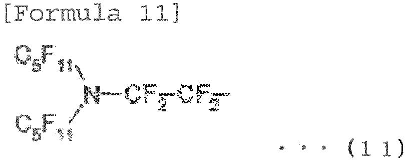

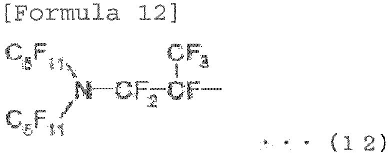

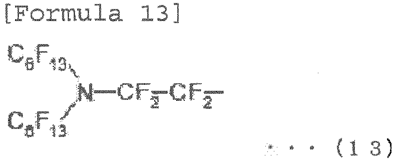

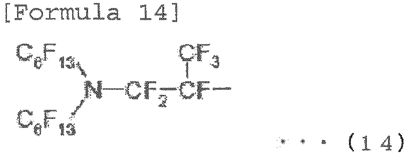

Also, as X in the above-mentioned formula (2), structures represented by the following formulae (15) to (18) can be mentioned. Incidentally, the following formula (15) shows an example containing an ether bond, the following formula (16) shows an ester bond, the following formula (17) shows an amide bond, the following formula (18) shows a urethane bond.

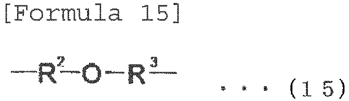

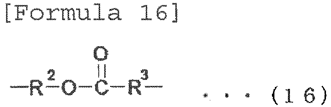

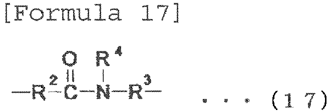

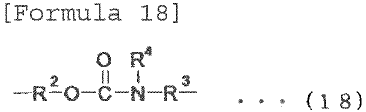

Here, in the above-mentioned formulae (15) to (18), R² and R³ represent a hydrocarbon group having 0-10 carbon atoms, and R⁴ represents a hydrogen atom or a hydrocarbon group having 1-6 carbon atoms. Examples of the hydrocarbon group of R³ may be mentioned an alkyl group such as a methyl group, an ethyl group, and the like, and examples of the hydrocarbon group of R⁴ may be mentioned an alkyl group such as a methyl group, an ethyl group, and the like, and also a phenyl group, a vinyl group, and the like.

Also, in the above-mentioned formula (2), R¹ may be mentioned a methoxy group, an ethoxy group, and the like, which are a hydrolyzable group.

Also, in the above-mentioned formula (2), Z is not particularly limited as long as it is a hydrolyzable group capable of forming an Si-O-Si bond by hydrolysis. Such a hydrolyzable group may be specifically mentioned, for example, an alkoxy group such as a methoxy group, an ethoxy group, a propoxy group, a butoxy group, and the like, an aryloxy group such as a phenoxy group, a naphthoxy group, and the like, an aralkyloxy group such as a benzyloxy group, a phenethyloxy group, and the like, and an acyloxy group such as an acetoxy group, a propionyloxy group, a butyryloxy group, a valeryloxy group, a pivaloyloxy group, a benzoyloxy group, and the like. Among these, it is preferable to apply a methoxy group or an ethoxy group.

Here, specific examples of the fluorine-containing silane having a perfluoroamine structure represented by the above-mentioned formula (2) may be mentioned, for example, structures represented by the following formulae (19) to (29) . Incidentally, in the following formulae (19) to (29), R represents a methyl group or an ethyl group.

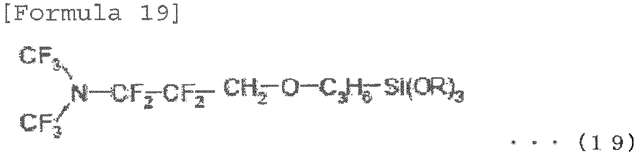

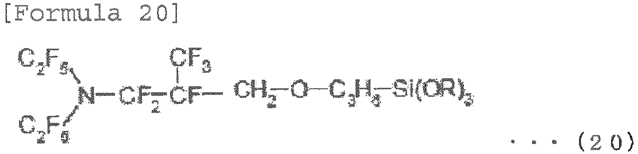

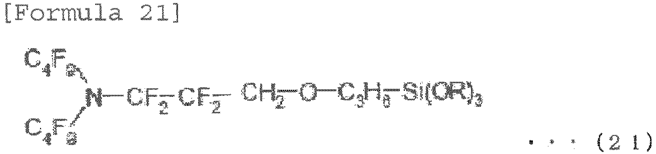

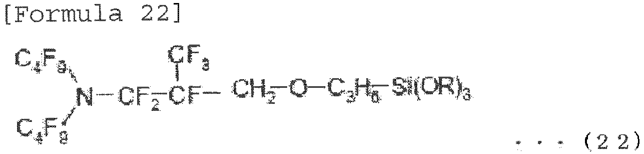

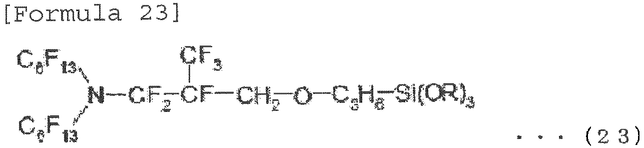

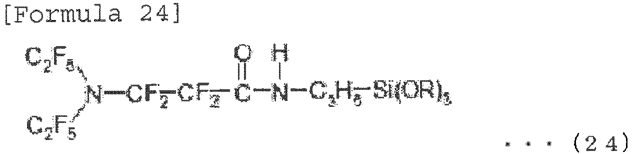

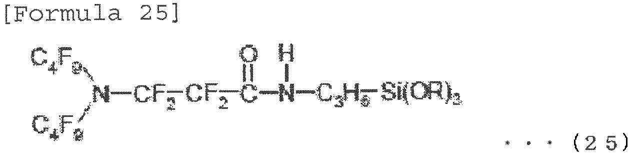

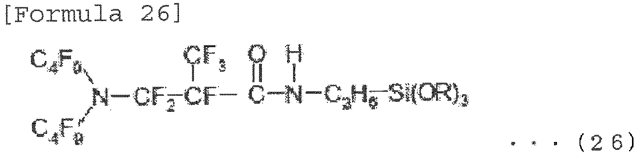

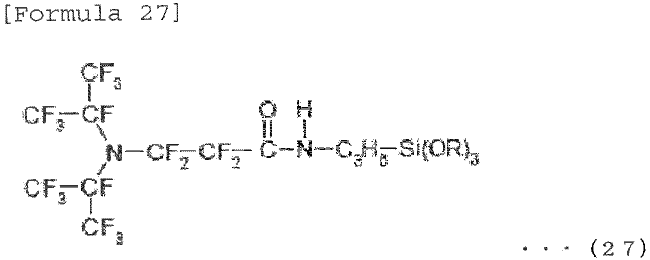

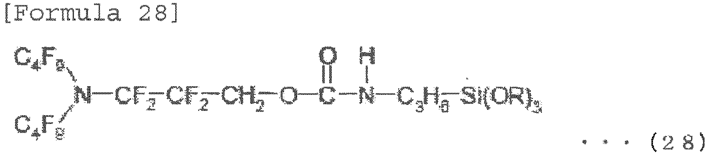

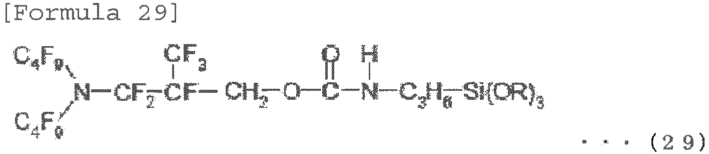

As described above, the fluorine-containing silane of this embodiment has a structure having each one or more of a nitrogen-containing perfluoroalkyl group(s) and an alkoxysilyl group(s) in the molecule, and has a nitrogen-containing perfluoroalkyl group in which a plurality of perfluoroalkyl groups with a short chain length of 6 or less carbon atoms are bonded to a nitrogen atom, so that the fluorine content in the molecule is high whereby excellent water and oil repellency and releasability can be imparted to the formed films.

The organic solvent other than the alcohol to be used with the alcohol having 1-4 carbon atoms may be mentioned a first solvent having a boiling point of 120°C or higher and lower than 160°C, and a second solvent having a boiling point of 160°C or higher and 220°C or lower. The first solvent has a boiling point intermediate between the alcohol having carbon atoms in the range of 1-4 and a boiling point of lower than 120°C and the second solvent, so that it has a function of relaxing a large difference in a drying speed of the coating film accompanied by the difference in boiling points of the above-mentioned alcohol and the second solvent at the time of drying the coating film, the second solvent has a higher boiling point than that of the first solvent, so that it has a function of preventing unevenness of the film accompanied by rapid drying due to slow drying speed of the coating film to prevent from rapid drying of the coating film, and the above-mentioned alcohol has a function of accelerating drying of the coating film since it has the lowest boiling point. Thus, by using three kinds of solvents having different boiling points, the drying speed of the solvent is adjusted, and the coating film can be formed more accurately and efficiently with good film formability.

When the first solvent is exemplified, there may be mentioned one or two or more kinds of solvents selected from the group consisting of 2-methoxyethanol (boiling point: 125°C), 2-ethoxyethanol (boiling point: 136°C), 2-isopropoxyethanol (boiling point: 142°C), 1-methoxy-2-propanol (boiling point: 120°C) and 1-ethoxy-2-propanol (boiling point: 132°C). In addition, when the second solvent is exemplified, there may be mentioned one or two or more kinds of solvents selected from the group consisting of diacetone alcohol (boiling point: 169°C), diethylene glycol monomethyl ether (boiling point: 194°C), N-methylpyrrolidone (boiling point: 202°C) and 3-methoxy-3-methyl-1-butanol (boiling point: 173°C).

### [Liquid composition for film formation]

The liquid composition for film formation of the present embodiment is produced by the above-mentioned production method and characterized in that it contains a solvent and a component that is mainly composed of silica sol-gel, and when the silica sol-gel is made 100% by mass, the silica sol-gel contains 0.5-10% by mass of a fluorine-containing functional group with a perfluoroamine structure represented by the above-mentioned general formula (1) and 0.5-20% by mass of an alkyl group having 2-7 carbon atoms, the above-mentioned solvent is a mixed solvent of water and an alcohol having 1-4 carbon atoms, or a mixed solvent of water, an alcohol having 1-4 carbon atoms and an organic solvent other than the above-mentioned alcohol.

The above-mentioned silica sol-gel contains the fluorine-containing functional group component (F) of the perfluoroamine structure represented by the above-mentioned general formula (1) and the alkyl group component (G) having 2-7 carbon atoms. More specifically, there may be mentioned the perfluoroamine structures represented by the above-mentioned formulae (9) to (29).

Since the liquid composition for film formation of the present embodiment contains a silica sol-gel as a main component, a coating film excellent in adhesion of the coating film to the substrate and high strength can be obtained. In addition, since the silica sol-gel is a perfluoroamine structure represented by the above-mentioned general formula (1), there are effects of water repellency and oil repellency. If the content ratio of the fluorine-containing functional group component (F) in the silica sol-gel is less than 0.5% by mass, stain preventive function such as water and oil repellency and releasability cannot be imparted to the formed film, while if it exceeds 10% by mass, repelling of the coating film, etc., occurs so that it is inferior in film formability. A preferable content ratio of the fluorine-containing functional group component (F) is 0.6-5% by mass. In addition, if the content ratio of the alkyl group component (G) having 2-7 carbon atoms in the silica sol-gel is less than 0.5% by mass, there is a problem that interference fringes of the film occurs, while if it exceeds 20% by mass, there is a problem that the film strength is insufficient. A preferable content ratio of an alkyl group component (G) having 2-7 carbon atoms is 1-10% by mass. If the carbon number of the alkyl group component (G) is 1, it does not occur theoretically because the epoxy group is opened. On the other hand, if the carbon number is 8 or more, there is a problem that the film strength is insufficient. A preferable carbon number of the alkyl group is 3-5.

### [Method for forming stain resistant film and mold releasability-imparting film]

The stain resistant film and mold releasability-imparting film of the present embodiment can be formed, for example, by applying the above-mentioned liquid composition on a metal plate such as stainless steel (SUS), iron, aluminum or the like, on a glass such as window glass, mirror or the like, on a tile, on a plastic such as polyvinyl chloride (PVC) or the like, or a polyester film such as polyethylene terephthalate (PET), polybutylene terephthalate, polyethylene naphthalate or the like, which are a substrate by a screen printing method, a bar coating method, a die coating method, a doctor blade, a spin method or the like, and then, drying at a temperature from room temperature to 130°C by room temperature drying or a dryer or the like.

### EXAMPLES

Next, Examples of the present invention will be explained in detail along with Comparative Examples.

### [Seven kinds of first hydrolyzates]

Seven kinds of first hydrolyzates of silane compounds to be used in Examples 1 to 7 of the present invention and Comparative Examples 1 to 4 were prepared. In Table 1, kinds and content ratios (% by mass) of the raw materials for preparing the first hydrolyzate of seven kinds of the silane compounds are shown. Incidentally, in Table 1, isoPG is 2-isopropoxyethanol, EtOH is ethanol, DAA is diacetone alcohol, NMP is N-methylpyrrolidone, IPA is 2-propanol, NPA is 1-propanol, and the mixed solvent is a mixture of 85% by mass of ethanol, 5% by mass of 2-propanol and 10% by mass of 1-propanol. In the first hydrolyzates I to V, the content ratio of the epoxy group-containing silane (B) based on the total mass of the silicon alkoxide (A) and the epoxy group-containing silane (B) is in the range of 1-40% by mass, which satisfy the requirement of B/(A+B) in the second aspect. On the other hand, the first hydrolyzates VI and VII do not satisfy the above-mentioned requirements.

### <Preparation of first hydrolyzate I>

To 99.0 g of trimer to pentamer of tetramethoxysilane (TMOS) (available from Mitsubishi Chemical Corporation, Trade name: MKC silicate MS51) as a silicon alkoxide (A), and 1.0 g of 3-glycidoxypropyltrimethoxysilane (available from Shin-Etsu Chemical Co., Ltd., Trade name: KBM-403) as an epoxy group-containing silane (B) was added 196.1 g of ethanol (EtOH) (boiling point: 78.3°C) as an organic solvent, further 36.0 g of deionized water was added thereto, and the mixture was stirred in a separable flask at a temperature of 25°C for 5 minutes to prepare a mixed liquid. Also, to the mixed liquid was added 1.1 g of hydrochloric acid having a concentration of 35% by mass as a catalyst, and the mixture was stirred at 40°C for 2 hours. According to the procedure, the first hydrolyzate I of the above-mentioned silane compound was prepared.

### <Preparation of first hydrolyzates II to VII>

First hydrolyzates II to VII were prepared in the same manner as the hydrolysate I under the conditions shown in Table 1. In the first hydrolyzate II, nitric acid with a concentration of 60% by mass was used as a catalyst, and the stirring as the polymerization conditions for hydrolysis was performed at 40°C for 2 hours. In the first hydrolyzate III, tetraisopropoxy titanium was used as a catalyst, and the stirring as the polymerization conditions for hydrolysis was performed at 40°C for 2 hours. In the first hydrolyzate IV, 3-glycidoxypropyltriethoxysilane (available from Shin-Etsu Chemical Co., Ltd., Trade name: KBE-403) was used as an epoxy group-containing silane (B), acetic acid was used as a catalyst, and the stirring as the polymerization conditions for hydrolysis was performed at 25°C for 24 hours.

**[Table 1]**

| First hydrolyzate C | | | | | | | | | | |
|---|---|---|---|---|---|---|---|---|---|---|
| Kind | Mixed liquid | | | | | | | Catalyst | | |
| | Silicon alkoxide A | | Epoxy group-containing silane B | | | Water | EtOH (First solvent) | | | |
| | Kind | Mass (g) | Kind | Mass (g) | B/(A+B) (% by mass) | Mass (g) | Mass (g) | Kind | Concentration (%) | Mass (g) |
| I | TMOS | 99.0 | KBM-403 | 1.0 | 1.0 | 36.0 | 196.1 | Hydrochloric acid | 35 | 1.1 |
| II | TMOS | 95.0 | KBM-403 | 5.0 | 5.0 | 36.0 | 196.7 | Nitric acid | 60 | 0.7 |
| III | TMOS | 86.0 | KBM-403 | 14.0 | 14.0 | 36.0 | 196.3 | Tetraiso propoxy titanium | 100 | 0.8 |
| IV | TMOS | 60.5 | KBE- | 39.5 | 39.5 | 36.0 | 196.3 | Acetic acid | 100 | 1.0 |
| V | TEOS | 90.0 | KBM-402 | 10.0 | 10.0 | 36.0 | 196.8 | Phosphoric acid | 85 | 0.5 |
| VI | TMOS | 58.0 | KBM-403 | 42.0 | 42.0 | 36.0 | 196.7 | Nitric acid | 60 | 0.7 |
| VII | TMOS | 99.5 | KBM-403 | 0.5 | 0.5 | 36.0 | 196.6 | Nitric acid | 60 | 0.7 |

In the first hydrolyzate V, tetraethoxysilane (TEOS) was used as a silicon alkoxide (A), 3-glycidoxypropylmethyldimethoxysilane (available from Shin-Etsu Chemical Co., Ltd., Trade name: KBM-402) was used as an epoxy group-containing silane (B), phosphoric acid with a concentration of 85% by mass was used as a catalyst, and the stirring as the polymerization conditions for hydrolysis was performed at 60°C for 2 hours. The first hydrolyzates VI and VII were prepared using the same compounds as the first hydrolyzate II, at the formulation ratio shown in Table 1, respectively, and the stirring as the polymerization conditions for hydrolysis was performed at 40°C for 2 hours.

### <Example 1>

As shown in Table 2, to 10 g of the liquid in which the first hydrolyzate I of the above-mentioned silane compound was formed were added 0.01 g of fluorine-containing silane (D) represented by the formula (22), 74.6 g of a mixed solvent (a mixed solvent comprising 85% by mass of ethanol, 5% by mass of 2-propanol and 10% by mass of 1-propanol) as an alcohol having 1-4 carbon atoms, 11.2 g of 2-isopropoxyethanol (isoPG) (boiling point: 142°C) as a first solvent of an organic solvent other than the alcohol, and 1.6 g of diacetone alcohol (DAA) (boiling point: 169°C) as a second solvent of the same, and the mixture was stirred at 25°C for 10 minutes. According to the procedure, the above-mentioned fluorine-containing silane (D) was hydrolyzed to obtain a liquid composition containing a second hydrolyzate (silica sol-gel) (E). The ratios of each of components of the liquid composition containing this second hydrolyzate (silica sol-gel) (E) are shown in Table 3.

### <Examples 2 to 7 and Comparative Examples 1 to 4>

Using the fluorine-containing silane (D), an alcohol having 1-4 carbon atoms, and organic solvent other than the alcohol (a first solvent and a second solvent) shown in Table 2, liquid compositions of Examples 2 to 7 and Comparative Examples 1 to 4 were obtained in the same manner as in Example 1. The ratios of each of components of the liquid compositions containing the second hydrolyzate (silica sol-gel) (E) of Examples 1 to 7 and Comparative Examples 1 to 4 are shown in Table 3.

**[Table 2-1]**

| | Liquid composition containing second hydrolyzate (silica sol-gel) E | | | | | | | | | | |
|---|---|---|---|---|---|---|---|---|---|---|---|
| | Liquid containing first hydrolyzate | | Fluorine-containing silane D | | | Alcohol having 1-4 carbon atoms | | Organic solvent other than alcohol | | | |
| | First hydrolyzate C | | Kind | Mass (g) | D/ E (% by mass) | | | First solvent | | Second solvent | |
| | | | | | | Kind | Mass (g) | Kind | Mass (g) | Kind | Mass (g) |
| | Kind | Mass (g ) | | | | | Ratio (% by mass) | | Ratio (% by mass) | | Ratio (% by mass) |
| Exam-ple 1 | I | 10.0 | Formula (22) | 0.01 | 0.6 | Mixed solvent | 74.6 | isoPG | 11.2 | DAA | 1.6 |
| | | | | | | | 85.4 | | 12.8 | | 1.8 |
| Exam-ple 2 | II | 10.0 | Formula (29) | 0.10 | 5.7 | Mixed solvent | 74.6 | isoPG | 11.2 | DAA | 1.6 |
| | | | | | | | 85.4 | | 12.8 | | 1.8 |
| Exam-ple 3 | III | 10.0 | Formula (29) | 0.20 | 11.0 | NPA | 104.4 | 2-Ethoxyethanol | 10.4 | DAA | 1.3 |
| | | | | | | | 89.9 | | 9.0 | | 1.1 |
| Exam-ple 4 | IV | 10.0 | Formula (26) | 0.10 | 6.0 | IPA | 74.7 | isoPG | 11.2 | 3-Methoxy-3-methyl-1-butanol | 1.6 |
| | | | | | | | 85.4 | | 12.8 | | 1.8 |
| Exam-ple 5 | V | 10.0 | Formula (28) | 0.10 | 8.5 | EtOH | 58.0 | 1-Ethoxy-2-propanol | 10.0 | NMP | 2.0 |
| | | | | | | | 82.8 | | 14.3 | | 2.9 |
| Exam-ple 6 | II | 1.0 | Formula (29) | 0.02 | 11.7 | EtOH | 99.9 | -- | -- | -- | -- |
| | | | | | | | 100. 0 | | | | |

**[Table 2-2]**

| | Liquid composition containing second hydrolyzate (silica sol-gel) E | | | | | | | | | | |
|---|---|---|---|---|---|---|---|---|---|---|---|
| | Liquid containing first hydrolyzate | | Fluorine-containing silane D | | | Alcohol having 1-4 carbon atoms | | Organic solvent other than alcohol | | | |
| | First hydrolyzate C | | Kind | Mass (g) | D/E (% by mass) | | | First solvent | | Second solvent | |
| | | | | | | Kind | Mass (g) | Kind | Mass (g) | Kind | Mass (g) |
| | Kind | Mass (g) | | | | | Ratio (% by mass) | | Ratio (% by mass) | | Ratio (% by mass) |
| Example 7 | II | 30.0 | Formula (29) | 0.24 | 3.5 | EtOH | 34.3 | isoPG | 4.0 | DAA | 1.0 |
| | | | | | | | 87.3 | | 10.2 | | 2.5 |
| Comparative Example 1 | VI | 10.0 | Formula (29) | 0.08 | 4.5 | Mixed solvent | 74.6 | isoPG | 11.2 | DAA | 1.6 |
| | | | | | | | 85.3 | | 12.8 | | 1.8 |
| Comparative Example 2 | VII | 10.0 | Formula (29) | 0.08 | 4.6 | Mixed solvent | 74.6 | isoPG | 11.2 | DAA | 1.6 |
| | | | | | | | 85.4 | | 12.8 | | 1.8 |
| Comparative Example 3 | II | 10.0 | Formula (29) | 0.25 | 13.2 | EtOH | 73.4 | isoPG | 10.0 | DAA | 4.0 |
| | | | | | | | 84.0 | | 11.4 | | 4.6 |
| Comparative Example 4 | II | 40.0 | Formula (29) | 0.02 | 0.2 | EtOH | 39.5 | isoPG | 6.0 | DAA | 1.0 |
| | | | | | | | 85.0 | | 12.9 | | 2.1 |

**[Table 3-1]**

| | Liquid composition containing second hydrolyzate (silica sol-gel) E | | | | | | | | | | |
|---|---|---|---|---|---|---|---|---|---|---|---|
| | Second hydrolyzate (silica sol-gel) E | | | Components other than second hydrolyzate (silica sol-gel) E | | | | | | | Total (% by mass) |
| | (% by mass) | Fluorine functional group component E/E (% by mass) in silica sol-gel | Alkyl group component G/E (% by mass) in silica sol-gel | Water | Alcohol having 1-4 carbon atoms | | Organic solvent other than alcohol | | | | |
| | | | | % by mass | | | First solvent | | Second solvent | | |
| | | | | | Kind | % by mass | Kind | % by mass | Kind | % by mass | |
| Example 1 | 1.7 | 0.5 | 0.5 | 1.2 | Mixed solvent | 82.9 | isoPG | 12.4 | DAA | 1.8 | 100.0 |
| Example 2 | 1.8 | 5.0 | 2.6 | 1.2 | Mixed solvent | 82.8 | isoPG | 12.4 | DAA | 1.8 | 100.0 |
| Exam-ple 3 | 1.4 | 9.5 | 6.8 | 0.9 | NPA | 87.9 | 2-Ethoxyethanol | 8.7 | DAA | 1.1 | 100.0 |
| Exam-ple 4 | 1.7 | 5.2 | 18.1 | 1.2 | IPA | 82.9 | isoPG | 12.4 | 3-Methoxy-3-methyl-1-butanol | 1.8 | 100.0 |
| Example 5 | 1.5 | 7.6 | 8.5 | 1.5 | EtOH | 0.4 | 1-Ethoxy-2-propanol | 13.9 | NMP | 2.7 | 100.0 |
| Example 6 | 2 | 8.2 | 2.1 | 0.1 | EtOH | 99.7 | -- | -- | -- | -- | 100.0 |
| Exam-ple 7 | 10.0 | 4.2 | 2.7 | 6.9 | EtOH | 72.5 | isoPG | 8.5 | DAA | 2.1 | 100.0 |

**[Table 3-2]**

| | Liquid composition containing second hydrolyzate (silica sol-gel) E | | | | | | | | | | |
|---|---|---|---|---|---|---|---|---|---|---|---|
| | Second hydrolyzate (silica sol-gel) E | | | Components other than second hydrolyzate (silica sol-gel) E | | | | | | | Total (% by mass) |
| | (% by mass) | Fluorine functional group compone(% E/E mass) in silica sol-gel | Alkyl group component G/E (% by mass) in silica sol-gel | Water | Alcohol having 1-4 carbon atoms | | Organic solvent other than alcohol | | | | |
| | | | | % by mass | | | First solvent | | Second solvent | | |
| | | | | | Kind | % by mass | Kind | % by mass | Kind | % by mass | |
| Comparative Example 1 | 1.8 | 4.0 | 21.6 | 1.2 | Mixed solvent | 82.8 | iso PG | 12.4 | DAA | 1.8 | 100.0 |
| Comparative Example 2 | 1.8 | 4.1 | 0.3 | 1.2 | Mixed solvent | 82.8 | iso PG | 12.4 | DAA | 1.8 | 100.0 |
| Comparative Example 3 | 1.9 | 11.6 | 2.4 | 1.2 | EtOH | 81.4 | iso PG | 11.1 | DAA | 4.4 | 100.0 |
| Compara tive Example 4 | 10.8 | 0.2 | 2.7 | 7.6 | EtOH | 69.3 | iso PG | 10.5 | DAA | 1.8 | 100.0 |

### <Comparative test and evaluation>

Eleven kinds of the liquid compositions obtained in Examples 1 to 7 and Comparative Examples 1 to 4 were each applied onto a SUS substrate having a thickness of 2 mm, a length of 150 mm and a width of 75 mm using a bar coater (manufactured by Yasuda Seiki Seisakusho, model number No. 3) to have a thickness after drying of 0.5-1 µm to form 11 kinds of coated films. Here, film formability at the time of coating by a bar coater was firstly evaluated. Subsequently, all the coated films were dried at room temperature for 3 hours to obtain 11 kinds of films provided with stain resistance and releasability. For these films, water repellency and oil repellency of the film surface, dropping of n-hexadecane, water resistance of the film, strength of the film, adhesion of the film to the substrate and releasability from the film-attached substrate were evaluated. These results are shown in Table 4. Incidentally, in Table 4, n-hexadecane is simply mentioned as "HD".

### (1) Film formability

Film formability was evaluated by visually examining the film. A film which could be applied uniformly to the liquid composition without occurrence of repellent phenomena, streak, and the like at the entire film was judged as "good", that in which repellent phenomena, streak, and the like are slightly generated at a part of the film was judged as "acceptable", and that in which repellent phenomena, strike, and the like are generated at the entire film was judged as "bad".

### (2) Presence or absence of iridescent interference fringes

The film was visually inspected to check the presence or absence of occurrence of iridescent interference fringes over the entire film, and those without interference fringes were judged as "absent" and those with interference fringes were judged as "present".

### (3) Water repellency of film surface (contact angle)

Using Drop Master DM-700 manufactured by Kyowa Interface Science Inc., ion-exchanged water at 22°C±1°C was prepared in a syringe, and allow 2 µL of droplets to be ejected from the tip of the needle of the syringe. Then, a stain resistant film on a SUS substrate to be evaluated is brought close to a droplet and the droplet is attached to the stain resistant film. The contact angle of the attached water was measured. An analyzed value of a contact angle after 1 second of contact of water with the film surface in a stationary state by the θ/2 method was made a contact angle of water, and water repellency of the film surface was evaluated.

### (4) Oil repellency of film surface (contact angle)

Using Drop Master DM-700 manufactured by Kyowa Interface Science Co., Ltd., n-hexadecane at 22°C±1°C was prepared in a syringe, and allow 2 µL of droplets to be ejected from the tip of the needle of the syringe. Then, a stain resistant film on a SUS substrate to be evaluated is brought close to a droplet and the droplet is attached to the stain resistant film. The contact angle of the attached n-hexadecane was measured. An analyzed value of a contact angle after 1 second of contact of n-hexadecane with the film surface in a stationary state by the θ/2 method was made a contact angle of n-hexadecane, and oil repellency of the film surface was evaluated. When the surface state of the film is roughened by unevenness, it exhibits a higher value than usual, and therefore, when the contact angle is too high, it is a judgement standard that the film formability is bad.

### (5) Dropping test of n-hexadecane

Using Drop Master DM-700 manufactured by Kyowa Interface Science Inc., n-hexadecane at 25°C±1°C was prepared in a syringe, 9 µL of liquid droplets of n-hexadecane was dropped from the syringe on a SUS substrate placed horizontally, the substrate was inclined at a rate of 2 degree/min, and the inclined angle of the substrate was measured when the liquid droplets of n-hexadecane started to move. Even if the contact angle of (4) is low, the smaller the falling angle, the higher the stain resistance.

### (6) Water resistance of film

A stain resistant film to be evaluated was placed in water in which 5-15°C tap water was flowing at a rate of 500 mL/min together with a SUS substrate horizontally for 24 hours, dried at a room temperature, then, contact angles of water and n-hexadecane were measured, and when the difference of less than 15° from the contact angle before immersion was judged as "good" and when it was different by 15° or more, it was judged as "bad" to evaluate water resistance of the film.

### (7) Strength of film

The film was rubbed 20 times with a sponge containing water, and the film was evaluated with naked eyes. The case where peeling does not occur at all in the film was judged as "good", the case where peeling slightly occurs in a part of the film was judged as "acceptable", and the case where peeling occurs in most part of the film was judged as "bad".

### (8) Adhesiveness of film to substrate and releasability from film-attached substrate

A coating film was formed onto a SUS304 substrate with 75 mm × 150 mm × 2 mm of thickness. When the cellophane tape was pasted on the coating film and then the tape was peeled off, the case where the coating film does not adhere to the tape side at all was judged that the adhesion was "good", and the case where most part of the coating film was adhered to the tape side and the coating film was peeled off at the interface of the SUS substrate was judged that the adhesion was "bad".

A film was formed on the same substrate as the SUS304 substrate used to confirm the adhesion of the film to the substrate. An epoxy resin available from Konishi Co. , Ltd. , and a glass cloth were laminated on the film and dried for 8 hours to form an FRP layer. When the FRP layer could be peeled off from the SUS304 substrate without applying any specific force to the formed FRP layer, it was judged that releasability was "good". On the other hand, when the formed FRP layer could not be peeled off from the SUS304 substrate even when using a scraper or the like, it was judged that releasability was "bad".

**[Table 4]**

| | Evaluation of film | | | | | | | | |
|---|---|---|---|---|---|---|---|---|---|
| | Film formability | Presence or absence of interference fringes | Contact angle (°) | | HD dropping angle (°) | Water resistance | Strength of film | Adhesiveness of film to substrate | Releasability of film-attached substrate |
| | | | Water | HD | | | | | |
| Example 1 | Good | None | 102 | 55 | 12 | Good | Good | Good | Good |
| Example 2 | Good | None | 99 | 53 | 10 | Good | Good | Good | Good |
| Example 3 | Acceptable | None | 103 | 56 | 12 | Good | Good | Good | Good |
| Example 4 | Acceptable | None | 99 | 53 | 18 | Good | Acceptable | Good | Good |
| Example 5 | Acceptable | None | 95 | 51 | 22 | Good | Good | Good | Good |
| Example 6 | Good | None | 101 | 56 | 12 | Good | Good | Good | Good |
| Example 7 | Good | None | 103 | 55 | 12 | Good | Good | Good | Good |
| Comparative Example 1 | Acceptable | None | 98 | 52 | 28 | Bad | Bad | Bad | Bad |
| Comparative Example 2 | Good | Present | 103 | 57 | 12 | Good | Good | Good | Good |
| Comparative Example 3 | Bad | None | 102 | 55 | 48 | Good | Acceptable | Bad | Bad |
| Comparative Example 4 | Bad | None | 103 | 60 | 46 | Bad | Bad | Bad | Bad |

As clearly seen from Table 4, in the liquid composition of Comparative Example 1, which was derived from the first hydrolyzate VI where the ratio of "B/(A+B)" was 42.0% by mass, and the ratio of the epoxy-containing silane was too much, so that there is no occurrence of interference fringes but the strength of the film was bad. That is, the ratio of "G/E" which is a ratio of the alkyl group component (G) to the silica sol-gel (E) shown in Table 3 was 21.6% by mass so that the film strength was insufficient, and the water resistance of the film, the strength of the film, the adhesion of the film to the substrate and the releasability from the film-attached substrate were all bad.

Also, in the liquid composition of Comparative Example 2, which was derived from the first hydrolyzate VII where the ratio of "B/(A+B)" was 0.5% by mass, the ratio of the epoxy-containing silane was too little, so that film formability was good but interference fringes were generated. That is, the ratio of "G/E" which is a ratio of the alkyl group component (G) to the silica sol-gel component (E) shown in Table 3 was 0.3% by mass so that interference fringes were generated. However, a ratio of the fluorine functional group component (F) "F/E" shown in Table 3 was 4.1% by mass, and the strength of the film was expressed so that the water resistance of the film, the adhesion of the film to the substrate, and the releasability from the film-attached substrate were all good.

In addition, in the liquid composition of Comparative Example 3, a ratio "F/E" which is a ratio of the fluorine functional group component (F) to the silica sol-gel component (E) shown in Table 3 was excessive as 11.6% by mass, so that there is no occurrence of interference fringes, and the water resistance of the film and the strength of the film were acceptable but dropping of hexadecane was not expressed whereby the film formability, the adhesion of the film to the substrate and the releasability from the film-attached substrate were all bad.

Further, in the liquid composition of Comparative Example 4, a ratio "F/E" which is a ratio of the fluorine functional group component (F) to the silica sol-gel component (E) shown in Table 3 was too little as 0.2% by mass, so that there is no occurrence of interference fringes but dropping of hexadecane was not expressed, and the water resistance of the film, the strength of the film, the adhesion of the film to the substrate and the releasability from the film-attached substrate were all bad.

To the contrary, as clearly seen from Table 4, in the liquid compositions of Examples 1 to 7, there was no occurrence of interference film, and the film formability, the water and oil repellency of the coating film, the dropping angle of hexadecane, the water resistance, the strength of the film, the adhesion of the film to the substrate and the releasability from the film-attached substrate were all good.

### UTILIZABILITY IN INDUSTRY

The liquid composition for film formation of the present invention is used in the field of preventing oil stains in factories using machine oil, kitchens in which oil is scattered, range hoods in which oil vapors can sink, ventilation fans, refrigerator doors and the like. In addition, it is used in the field of easily releasing a molded body from a metal mold and the like, when a resin molded body or a ceramic molded body is produced by a press molding method, an FRP molding method or the like.

## Claims

1. A liquid composition for film formation which comprises:
a component that is mainly composed of silica sol-gel; and
a solvent,
when the silica sol-gel is taken as 100% by mass, the silica sol-gel contains 0.5-10% by mass of a fluorine-containing functional group component (F) that has a perfluoroamine structure represented by general formula (1) and 0.5-20% by mass of an alkyl group component (G) that has 2-7 carbon atoms,
the solvent is a mixed solvent of water and an alcohol having 1-4 carbon atoms, or a mixed solvent of water, an alcohol having 1-4 carbon atoms and an organic solvent other than the alcohol. 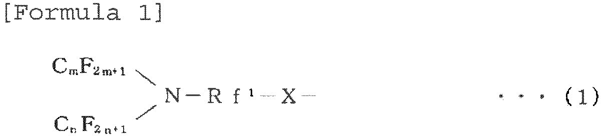 In the formula (1), m and n are each the same or different integer of 1-6. Also, Rf¹ represents a perfluoroalkylene group having 1-6 carbon atoms, which may be linear or branched. In addition, in the formula (1), X represents a hydrocarbon group having 2-10 carbon atoms, and may contain one or more bondings selected from an ether bond, a CO-NH bond and a -O-CO-NH bond.

2. A method for producing a liquid composition for film formation which comprises
(a) a step of mixing tetramethoxysilane or tetraethoxysilane as a silicon alkoxide (A), an epoxy group-containing silane (B), a first solvent having a boiling point of lower than 120°C and water to prepare a mixed liquid,
(b) a step of mixing the mixed liquid and a catalyst comprising an organic acid, an inorganic acid or a titanium compound and hydrolyzing the silicon alkoxide (A) and the epoxy group-containing silane (B) to prepare a liquid containing a first hydrolyzate (C), and
(c) a step of mixing a fluorine-containing silane (D) represented by the following general formula (2), an alcohol having 1-4 carbon atoms or a mixed solvent of an alcohol having 1-4 carbon atoms and an organic solvent other than the alcohol with the liquid containing the first hydrolyzate (C) and hydrolyzing the fluorine-containing silane (D) to produce a liquid composition for film formation containing a silica sol-gel (E) which is a second hydrolyzate,
wherein in the step (a), the epoxy group-containing silane (B) is so mixed that it contains in an amount of 1-40% by mass based on the total mass of the silicon alkoxide (A) and the epoxy group-containing silane (B), and
in the step (c), the fluorine-containing silane (D) is so mixed that it is contained in a ratio of 0.6-12% by mass based on the silica sol-gel (E). 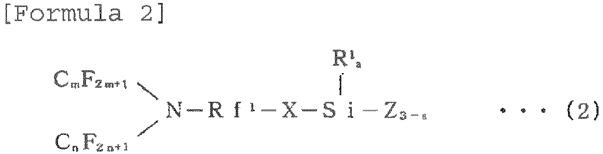 In the formula (2), m and n are each the same or different integer of 1-6. Also, Rf¹ represents a perfluoroalkylene group having 1-6 carbon atoms, which may be linear or branched. In addition, in the formula (2), X represents a hydrocarbon group having 2-10 carbon atoms, and may contain one or more bondings selected from an ether bond, a CO-NH bond and a -O-CO-NH bond. Further, in the formula (2), R¹ and Z are alkoxy groups (provided that "a" is an integer of 0 to 3) .
